# EUROPÄISCHE PATENTSCHRIFT

(11) **EP 0 635 718 B1**
(45) Veröffentlichungstag und Bekanntmachung des Hinweises auf die Patenterteilung: **27.01.1999**
(21) Anmeldenummer: 94110689.0
(22) Anmeldetag: 08.07.1994
(51) Int. Cl.: G01N 27/411

(54) **NEUE VERWENDUNG EINER METALL/METALLOXID ELEKTRODE**
NEW USE OF A METAL/METALOXIDE ELECTRODE
NOUVELLE APPLICATION D'UNE ELECTRODE METAL/OXYDE METALLIQUE

(30) Priorität: 24.07.1993 DE 4324922
(43) Veröffentlichungstag der Anmeldung: 25.01.1995
(73) Patentinhaber: Schott Glas, 55122 Mainz (DE); CARL-ZEISS-STIFTUNG trading as Schott Glas, 55122 Mainz (DE)
(72) Erfinder: Baucke, Friedrich, Dr., D-55116 Mainz (DE); Pfeiffer, Thomas, Dr., D-55218 Ingelheim (DE); Biedenbender, Sylvia, D-55411 Bingen (DE); Röth, Gernot, D-55278 Dalheim (DE); Werner, Ralf-Dieter, D-55487 Laufersweiler (DE)

(56) Entgegenhaltungen:
- DE-A- 2 749 357
- DE-A- 2 757 985
- DE-A- 2 807 247
- DE-A- 4 138 409
- FR-A- 2 122 758
- FR-A- 2 270 586
- US-A- 3 378 478
- US-A- 4 313 799

## Beschreibung

Die Erfindung betrifft eine neue Verwendung einer Metall/Metalloxid-Elektrode mit einem metallischen Elektrodenkörper, welcher mit einer Schicht aus einem schwerlöslichen Oxid dieses Metalls überzogen ist.

Es ist bekannt, die Qualität von Glasschmelzen durch elektrochemische Bestimmung des Sauerstoffpartialdrucks zu überwachen. So gibt der Sauerstoffpartialdruck Aufschluß über den Redoxzustand in der Glasschmelze. Dieser wiederum nimmt Einfluß auf alle Eigenschaften der Glasschmelze, die über Redoxsysteme eingestellt werden können, beispielsweise auf den Läuterzustand oder die Färbung der Schmelze, um nur einige Beispiele zu nennen. Einzelheiten hierzu sind u. a. in Baucke, F.G.K, "High-Temperature Sensors for Oxidic Glass-Forming Melts" in Sensors - A Comprehensive Survey; Vol. 3; Chemical and Biochemical Sensors Part II; 1992, pp 1156 - 80 beschrieben.

Zur Messung des Sauerstoffpartialdrucks pO₂ in Glasschmelzen wurden bisher sog. ZrO₂-Referenzelektroden aus Yttrium-stabilisiertem Zirkondioxid eingesetzt. Diese bekannten Elektroden, die dem Oberbegriff des Patentanspruchs 1 zugrundeliegen, sind in der Literatur vielfach beschrieben worden, so z. B. auch in der oben genannten Veröffentlichung von Baucke.

Zur Messung des Sauerstoffpartialdrucks sind sie Bestandteil der isothermen elektrochemischen Meßkette

Pt, O₂(1) / ZrO₂ + xY₂O₃ / Schmelze, O₂(2) / Pt

aus deren EMK (Elektromotorische Kraft) E sich der Sauerstoffpartialdruck der Schmelze pO₂(2) nach der Formel

pO₂(2) = pO₂(1) · e^{-E 4 F/ (R T)} (1)

(F = Faradaykonstante, R = Gaskonstante, T = Temperatur) berechnen läßt.

Es ist wesentlich für die Funktion der ZrO₂-Referenzelektrode, daß an der Dreiphasengrenze Pt(1), O₂(1)ZrO₂ + xY₂O₃ ein definierter Sauerstoffpartialdruck pO₂(1) herrscht. Dies ist am bequemsten durch definierte Gasströme (meist Luft oder reiner Sauerstoff) oder durch geeignete Metall/Metalloxid-Puffer gewährleistet.

Üblicherweise führt man die ZrO₂-Referenzelektrode als Halbrohr aus Zirkondioxid aus oder als zylindrischen massiven Zapfen, der mittels einer Bohrung an einem zylindrischen Aluminiumoxidrohr gehalten wird. Die sauerstoff- bzw. luftumspülte oder von dem oben genannten Metall/Metalloxid-Puffer umgebene Platinelektrode befindet sich im Inneren des Zirkondioxid-Rohres bzw. endet oberhalb des zylindrischen massiven Zapfens im Aluminiumoxidrohr, wobei der Kontakt zwischen Platin-Elektrode und ZirkondioxidRohr bzw. Zapfen üblicherweise durch Einbetten der Platin-Elektrode in ein Zirkondioxidpulver verbessert wird.

Eine ideale Messung verläuft so, daß beim "unendlich langsamen" Durchgang von 4F Elektronen durch das Meßinstrument an den Elektroden genau 1 mol O₂ umgesetzt wird und dabei reversibel vom höheren zum niedrigeren Druck expandiert.

Die Keramik Zirkondioxid besitzt in der Meßsonde zugleich eine trennende wie auch leitende Funktion. Einerseits verhindert sie den direkten Austausch von neutralem Sauerstoff und Elektronen (Kurzschluß der Zelle), andererseits erlaubt sie als fast reiner Sauerstoffionenleiter den oben beschriebenen Transport von Ionen (Elektrolytschlüssel). Darüber hinaus ist Zirkondioxid i. a. recht stabil gegenüber der Korrosion durch Glasschmelzen.

Diese vorteilhaften Eigenschaften des Zirkonoxids sind seit langem bekannt und führten zum weitverbreiteten Einsatz bei der thermodynamischen Untersuchung fester Oxide. Die hohen Anforderungen an Temperaturwechselbeständigkeit und Korrosionsfestigkeit in oxidischen Glasschmelzen verhinderten lange einen routinemäßigen Einsatz im Glaslabor, ganz zu Schweigen von Wanneneinsätzen. Erst mit der kommerziellen Verbreitung der Yttrium-stabilisierten Halbrohre und Stäbe waren problemlose Labormessungen möglich. Als nicht so einfach erwies sich der Einsatz an Glasschmelzwannen, wo die Einsatzbedingungen spezielle Vorsichtsmaßnahmen und Konstruktionen erzwingen. Inzwischen liegen auch hierfür standardisierte Lösungen vor (Müller-Simon et. al., Glastech. Ber. 64 (1991), 49-51).

Alle Bauformen ändern allerdings nichts an der grundsätzlichen Schwäche der Zirkondioxidsonde: Ihrer hohen Empfindlichkeit gegenüber mechanischer und besonders thermischer Belastung. Deshalb ist die Wahl der Einbauorte stark begrenzt, die Messung im Schmelzbecken oder im Läuterbereich ist praktisch ausgeschlossen; positive Erfahrungen liegen nur für Speiserrinnen vor.

Insbesondere während des Einbaus in die heiße Schmelzwanne bzw. beim Wiederantempern oder Abtempern von zwischenzeitlich abgekühlten Wannen kann es zum Bruch der Keramik kommen. Eine gebrochene oder gerissene Keramik macht die Sonde funktionsuntüchtig. Bruchstücke der Keramik können durch Steinbildung, mechanische Blockade im Rührtiegel, Speiseraggregaten etc. zu nachhaltigen Produktionsausfällen führen.

Darüber hinaus ist in einigen wenigen Glasschmelzen die Korrosion des Zirkondioxids so stark, daß eine reproduzierbare Messung des pO₂ nicht möglich ist.

Aufgabe der Erfindung ist, eine Referenzelektrode zur elektrochemischen Bestimmung des Sauerstoffpartialdrucks in lonenschmelzen, insbesondere in oxidischen Glasschmelzen, bei hohen Temperaturen, bereitzustellen, die bei mechanischer und thermischer Belastung stabil ist und deren Einsatzort in der Glasschmelzwanne frei wählbar ist.

Diese Aufgabe wird durch die Verwendung einer Metall/Metalloxidelektrode mit einem metallischen Elektrodenkörper, welcher mit wenigstens einer Schicht aus einem schwerlöslichen Oxid dieses Metalls überzogen ist, als Referenzelektrode zur elektrochemischen Bestimmung des Sauerstoffpartialdrucks in lonenschmelzen, insbesondere in oxidischen Glasschmelzen, durch Messung der elektromotorischen Kraft der elektrochemischen Kette Pt / Me / Me-Oxid / Schmelze / Pt gelöst.

Metall/Metalloxidelektroden sind in der Elektrochemie wäßriger Lösungen als sog. Elektroden zweiter Art an sich bekannt. Sie bestehen aus einem Elektrodenkörper aus Metall, z. B. einem Metallstab, der von wenigstens einer Schicht aus einem schwerlöslichen Oxid dieses Metalls überzogen ist. (s. z.B. DT 21 21 047 B2 oder DE 35 07 183 C1).

Aus der FR-A-2 122 758 ist ein Meßkopf zur Bestimmung des Sauerstoff-Partialdrucks in Metallschmelzen bekannt, der aus einer Sauerstoff- und einer Temperaturmeßzelle und einer Gegenelektrode besteht. Die Sauerstoffmeßzelle besteht aus einem Quarzrohr, in dessen unteres Ende eine Festelektrolyttabelette eingeschweißt ist. Mit diesem Festelektrolyt in Kontakt steht eine Mo-Elektrode, die sich, da sie in dem Quarzrohr im übrigen von Luft umgeben ist, bei erstem Gebrauch mit einer Oxidschicht überzieht. Bei dieser Mo/MoO₂-Elektrode handelt es sich um die sog. Referenzelektrode der Sauerstoffmeßzelle. An ihr stellt sich der bekannte Referenzpartialdruck ein, der zur Bestimmung des unbekannten Sauerstoffpartialdrucks aus den Meßwerten herangezogen werden muß. Bei der oben beschriebenen bekannten Anordnung stellt die Mo/MoO₂-Elektrode somit die Referenzstelle der Sauerstoffmeßzelle dar. Die Mo/MoO₂-Elektrode selbst wird nicht in die Schmelze eingetaucht, sondern die gesamte Meßzelle. Die Mo/MoO₂-Elektrode ist daher stets durch die sie umgebende Luft, den Festkörperelektrolyten und dem Quarzrohr von der Schmelze getrennt.

Wie im Falle der Zirkondioxid-Referenzelektrode erfolgt gemäß der vorliegenden Erfindung auch bei der Metall/Metalloxidelektrode die Bestimmung des Sauerstoffpartialdrucks in der Schmelze durch Messung der EMK E einer elektrochemischen Kette. Diese läßt sich wie folgt darstellen:

Pt (1) / Me / O₂ (1) im Me-Oxid / Schmelze, O₂ (2) / Pt (2)

Es liegt auf der Hand, daß bei der erfindungsgemäßen Verwendung die Metall/Metalloxidelektrode selbst zur Messung des Sauerstoffpartialdrucks herangezogen wird und damit auch selbst in die Glasschmelze eingetaucht wird. Sie ist somit allenfalls mit der gesamten Meßzelle aus der FR-A-2 122 758 vergleichbar.

Der Sauerstoffpartialdruck errechnet sich ebenfalls nach Gleichung (1), wobei an die Stelle des Sauerstoffpartialdrucks an der Pt-Elektrode im Zirkondioxidrohr pO₂ (1) der Sauerstoffpartialdruck pO₂ (1) an der Phasengrenze Metall/Metalloxid tritt. Bringt man nämlich ein Metall Me ins Gleichgewicht mit seinem Oxid MeₓO_{y}, so stellt sich an der Phasengrenze Me/MeₓO_{y} ein definiertes Sauerstoffpotential ein, das nur noch von der Temperatur abhängt. Die thermodynamische Begründung dieses Phänomens fußt darauf, daß an der Phasengrenze Me/MeₓO_{y} mit dem Gleichgewicht der Bildungsreaktion

x Me + y O = MeₓO_{y} (2)

und dem zugehörigen Massenwirkungs-Gesetz

K (T) = a(MeₓO_{y}) / (a(Me)^{x} · a(O)^{y}) (3)

kein chemischer Freiheitsgrad mehr verbleibt: da die Aktivitäten der reinen kondensierten Phasen, d. h. des Metalls a(Me) und des reinen Metalloxids a(MeₓO_{y}), definitionsgemäß gleich 1 sind, ist die Sauerstoffaktivität an der Phasengrenze nur noch vom Temperaturgang der Massenwirkungskonstanten K (T) bestimmt. Aus den Lehrsätzen der Thermodynamik folgt dann der Zusammenhang (s. Lehrbücher der Physikalischen Chemie):

δlog pO₂(Me/MeₓO_{y})/δ(1/T) = -(2/y) · ΛH°/(2.303·R) (4)

(R = Gaskonstante). Demnach ändert sich die Sauerstoffaktivität an der Phasengrenze Me/MeₓO_{y} mit der Temperatur umso stärker, je größer die Reaktionsenthalpie ΛH° ist. Die Reaktionsenthalpie ΛH° ist selbst auch (schwach) von der Temperatur abhängig, ansonsten aber natürlich charakteristisch für das zu betrachtende Metall/Metalloxid-Paar.

Der Einfachheit halber werden für den Sauerstoffpartialdruck an der Phasengrenze Me/MeₓO_{y} als Funktion der Temperatur Eichkurven erstellt, die dann für die Auswertung der EMK-Messungen mit der Metall/Metalloxid-Elektrode eingesetzt werden können. Diese Eichkurven lassen sich entweder nach Gleichung 4 aus den bekannten thermodynamischen Daten für das betreffende Metall/Metalloxid-Paar berechnen oder aber experimentell durch Messung der EMK der Metall/Metalloxid-Elektrode beispielsweise gegen eine Zirkondioxid-Elektrode und Auswertung der Meßergebnisse nach Gleichung 1 bestimmen.

Die experimentelle Bestimmung der Eichkurven hat den Vorteil, daß für jede Schmelze charakteristische Eichkurven erstellt werden können. Durch Wechselwirkungen zwischen einzelnen speziellen Komponenten einer Schmelze und dem Elektrodenmaterial kann es zu einer Beeinflussung der Ergebnisse der Eichmessung kommen. Die Verwendung einer universellen Eichkurve für die unterschiedlichsten Schmelzen würde somit in vielen Fällen zu einer Verfälschung der gemessenen Sauerstoffpartialdrücke führen.

Dagegen lassen sich diese Störeinflüsse in einfacher Weise dadurch eliminieren, daß für jede Schmelze nur die ihr zugeordnete charakteristische Eichkurve verwendet wird.

Diese Probleme lassen sich bei der Berechnung einer theoretischen Eichkurve nach Gleichung 4 nicht beheben. Die Auswertung der EMK-Messungen einer Metall/Metalloxid-Elektrode mittels einer solchen theoretischen Eichkurve sollte daher nur dann vorgenommen werden, wenn lediglich Relativwerte von Interesse sind. Eine zuverlässige Ermittlung absoluter Sauerstoffpartialdrücke kann bei dieser Vorgehensweise nicht garantiert werden.

Zur Messung des Sauerstoffpartialdrucks in Glasschmelzen muß die erfindungsgemäße Elektrode aus einem Metall bestehen, das bei den in den Schmelzen herrschenden hohen Temperaturen ausreichend temperaturbeständig ist, d. h. das einen möglichst hohen Schmelzpunkt besitzt. Andererseits darf das Metall nicht "zu edel" sein, damit sich eine Oxidschicht ausbilden kann (thermodynamisches Kriterium der Oxidbildung), es darf aber auch nicht zu schnell zum Oxid durchreagieren (kinetisches Kriterium der Oxidbildung), um eine möglichst lange Lebensdauer der Meßsonde zu gewährleisten. Daneben sind Faktoren wie Kosten, Verarbeitbarkeit, Toxizität etc. zu beachten.

Das Oxid muß ebenfalls einen hohen Schmelzpunkt besitzen und darf in der Glasschmelze allenfalls schwerlöslich sein. Die Dicke der Oxidschicht sollte vorzugsweise wenigstens 10 nm betragen, es können aber auch schon einige wenige Atomlagen ausreichen.

Der Ort, an dem der Referenzpartialdruck pO₂(1) fixiert wird (hier die Phasengrenze Me/MeₓO_{y}) muß von der Schmelze mit dem zu messenden Partialdruck pO₂ (2) abgetrennt sein. An die elektrolytische Verbindung bestehen Anforderungen hinsichtlich der Leitfähigkeit für Ionen und Elektronen, die schon oben diskutiert wurden. ZrO₂ erfüllt diese als praktisch reiner Sauerstoffionenleiter. Bei der alternativen Referenzsonde übernimmt das Oxid MeₓO_{y} zugleich mit der potentialdefinierenden auch die elektrolytische Funktion. Die Anforderungen sind erfüllt, wenn das Oxid MeₓO_{y} entweder zu den reinen Sauerstoffionenleitern oder den reinen Kationenleitern (für Me) zählt. Liegt eine Mischleitung vor, so können sich störende Diffusionspotentiale aufbauen, die zu absolut geringeren EMK-Werten führen. Dem kann man dadurch begegnen, daß sich nach hinreichend langen Zeiten (z. B. einigen Stunden) stationäre, d.h. stabile und reproduzierbare Zustände bzgl. des Diffusionspotentials einstellen. Die ebenso reproduzierbaren Abweichung der EMK von den theoretischen Werten werden in der Eichung berücksichtigt.

Darüber hinaus müssen auch Störeinflüsse berücksichtigt werden, die dadurch entstehen, daß es zwischen der Oxidschicht MeₓO_{y} und der Glasschmelze zu chemischen Reaktionen kommt. Als Reaktionsprodukte kommen die Mischoxidbildung, die Bildung weiterer fester oxidischer Phasen und auch die Legierung des Metalls Me mit metallischen Komponenten der Oxidschmelze in Betracht. Diese Störeinflüsse können wie oben im Zusammenhang mit der Mischleitung beschrieben beseitigt werden.

Die großen Vorteile einer erfindungsgemäßen Metall/Metalloxid-Elektrode gegenüber der herkömmlichen ZrO₂-Sonde sind ihre Robustheit und Flexibilität, da der Meßaufbau keine keramischen Bauteile benötigt. Im einzelnen sind zu nennen der einfachere Aufbau, die höhere mechanische und thermische Belastbarkeit, der leichtere und ungefährlichere Einbau in die Wanne sowie die Tatsache, daß eine erfindungsgemäße Elektrode sowohl als Topelektrode als auch als Seiten- oder Bodenelektrode ausgeführt werden kann. Sie kann sowohl in der Schmelz- als auch in der Läuterwanne eingesetzt werden. Damit ist z. B. der Sauerstoffpartialdruck in der Schmelze längs der Wannenachse meßbar.

Beim Wanneneinbau einer erfindungsgemäßen Me/MeₓO_{y}-Elektrode ist zu beachten, daß der Einsatzort der als Gegenelektrode üblicherweise eingesetzten Pt-Meßelektrode von dem zu bewältigenden Problem bestimmt wird. Vorausgesetzt werden muß nur eine homogen aufgeschmolzene Schmelze zwischen dem Einsatzort der Bezugs- und Meßelektrode. Einflüsse auf die EMK-Bildung zwischen den beiden Elektroden durch Temperaturunterschiede können mit Hilfe des Standard-Seebeck-Koeffizienten der Glasschmelze, der zuvor im Labor experimentell ermittelt werden kann, korrigiert werden. Desgleichen können auch in an sich bekannter Weise Thermo- und Diffusionspotentiale korrigiert werden (s. hierzu z. B. K.S. Goto, W. Pluschkell, "Oxygen Concentration Cells" in: Physics of Electrolytes, Vol. II (Ed. Hladik), London 1972). Zur Auswertung der pO₂-Messung mit der Me/MeₓO_{y}/Pt-Meßkette müssen die drei Grössen Temperatur der Me/MeₓO_{y}-Elektrode, Temperatur der Pt-Elektrode und die EMK zwischen diesen beiden Elektroden kontinuierlich aufgenommen und verarbeitet werden.

Dabei ist vorgesehen, die sehr kleinen Thermospannungen nahe bei den Elektroden mit Spannungs/Strom-Wandlern in Stromsignale umzuwandeln und die gemessene EMK ebenfalls in der Nähe der Elektroden mit einem Impedanzwandler und anschließend mit einem Spannungs/Strom-Wandler in ein Stromsignal umzuwandeln. Die so erzeugten Stromsignale 0-20 mA können dann störunanfällig über weite Strecken zum Hüttenrechner oder einem zusätzlich aufgestellten PC übertragen werden, wo sie dann verarbeitet und gespeichert werden können.

Als geeignet haben sich für die Referenzelektrode insbesondere die folgenden Metalle erwiesen: Hf, Nb, Ta, Mo und W. Sie besitzen einen hohen Schmelzpunkt und bilden alle feste Oxide mit allerdings stark unterschiedlichen Schmelzpunkten:

Schmelzpunkt der Metalle und Oxide in °C (aus The Oxide Handbook, Ed. G.V. Samsonov, New York 1982):

| | |
|---|---|
| Hf | 2150 |
| HfO₂ | 2777 |
| | |
| Nb | 2468 |
| NbO | > 1900 |
| NbO₂ | > 1900 |
| Nb₂O₅ | 1511 |
| | |
| Ta | 2996 |
| Ta₂O₅ | 1877 |
| | |
| Mo | 2610 |
| MoO₂ | 1927 |
| MoO₃ | 795 |
| | |
| W | 3410 |
| WO₂ | 1570 |
| WO₃ | 1270 |

Für die genannten Metalle und ihre Oxide liegen auch termodynamische Daten vor, die es erlauben, nach Gleichung 4 die theoretischen Sauerstoffpartialdrücke an der Phasengrenze Me/MeₓO_{y} zu berechnen:

Bildungsenergien der Oxide:
(- ΛG° in kJ/mol, Quelle: the Oxide Handbook 1982 (siehe oben))

| | 1000K | 1200K | 1400K | 1600K | 1800K |
|---|---|---|---|---|---|
| HfO₂ | 920 | 884 | 848 | 814 | 779 |
| NbO | 318 | ... | ... | 276 | ... |
| Ta₂O₅ | 1607 | 1523 | 1443 | 1364 | ... |
| MoO₂ | 389 | ... | ... | 318 | ... |
| WO₂ | 401 | 366 | 333 | ... | ... |

Auch die Legierungen der oben genannten Metalle untereinander und ihre (Misch-) Oxide können eingesetzt werden. Darüber hinaus sind auch Anwendungsfälle denkbar, bei welchen eine Dotierung der genannten Metalle mit anderen Schwermetallen vorteilhaft sein kann.

Daneben sind prinzipiell auch noch die Metalle Ru, Re, Os geeignet, ihre Verwendung ist jedoch wegen der hohen Material- und Verarbeitungskosten und im Falle des Os wegen des hohen Dampfdrucks der toxischen Oxide weniger bevorzugt.

Der Einfachheit halber bildet sich die Oxidschicht auf dem Metallelektrodenkörper erst beim Eintauchen der Elektrode in die Schmelze. Hierdurch erspart man sich einen Arbeitsgang. Man muß in diesem Fall lediglich vor Beginn einer Messung abwarten, bis das System ins Gleichgewicht gekommen ist, d. h. bis stabile Verhältnisse eingetreten sind.

Im Normalfall wird die Oxidschicht bei der in die Schmelze eingetauchten Elektrode weiter in den metallischen Körper hinein wachsen. Andererseits wird sie, selbst wenn es sich um ein nur schwerlösliches Oxid handelt, von der Schmelze nach und nach von außen her abgetragen werden. Diese Vorgänge begrenzen die Lebensdauer einer erfindungsgemäß eingesetzten Elektrode, sie führen jedoch i. a. erst dann zu einer Störung der Messung, wenn der Metallkern nahezu vollständig verschwunden ist. Eine Änderung der Dicken der Metallschicht und der Metalloxidschicht relativ zueinander führt alleine noch zu keiner Beeinträchtigung der Meßergebnisse. Sicherheitshalber empfiehlt es sich jedoch, gegen Ende der Lebensdauer einer Metall/Metalloxidelektrode deren Funktionstüchtigkeit durch wiederholte Eichmessunger zu überprüfen.

Bevorzugt werden Referenzelektroden aus Mo eingesetzt. Die Wirkung der MoElektrode beruht darauf, daß sich in üblichen Glasschmelzen bei Temperaturen bis etwa 1900°C eine dünne, fest anhaftende MoO₂-Schicht bildet. Die Schicht wirkt zugleich passivierend und verhindert die schnelle Korrosion des relativ unedlen Molybdän in der Glasschmelze. Dies ist auch die eigentliche Grundlage dafür, daß Molybdänelektroden als Heizelektroden eingesetzt werden können. Wie nachfolgend im Ausführungsbeispiel näher erläutert wird, hat sich Mo als Elektrodenmaterial in den unterschiedlichsten Glasschmelzen hervorragend bewährt.

Es können Mo-Stäbe in der üblichen für den Bau von Heizelektroden verwendeten Qualität verwendet werden. Insbesondere kann die Referenzelektrode entweder eine vom Heizkreis abgeklemmte d. h. stillgelegte Heizelektrode sein oder eine zusätzlich montierte Elektrode, deren Temperatur entweder vorteilhafterweise durch ein im Elektrodeninneren angebrachtes Thermoelement oder durch ein zusätzlich angebrachtes Thermoelement gemessen wird. Die Temperaturen der in die Schmelze tauchenden Mo-Elektrodenteile sollten möglichst homogen sein. Bei der verwendeten Mo-Elektrode muß ferner sichergestellt sein, daß sie erdfrei in der Wanne montiert ist. Erdfrei meint dabei auch die Isolation von allen elektrisch leitenden Teilen der Wanne.

Die Elektrode ist vorzugsweise als Stab oder als halbseitig geschlossenes Rohr ausgebildet, da sie in diesem Fall einfacher gehaltert und bei Bedarf auch leicht ausgetauscht werden kann.

Nachfolgend wird die Erfindung anhand der Figuren und der Ausführungsbeispiele näher erläutert:

Es zeigen:
- Figur 1: einen möglichen Meßaufbau zur Erstellung der Eichkurven für eine erfindungsgemäße Metall/Metalloxid-Elektrode,
- Figur 2: einen möglichen Meßaufbau für die Verwendung einer erfindungsgemäßen Elektrode als Bodenelektrode,
- Fign. 3-7: die Meßergebnisse der an dem Meßaufbau von Figur durchgeführten Messungen mit Elektroden aus Mo, Wo und Tantal in verschiedenen Glasschmelzen, im einzelnen:

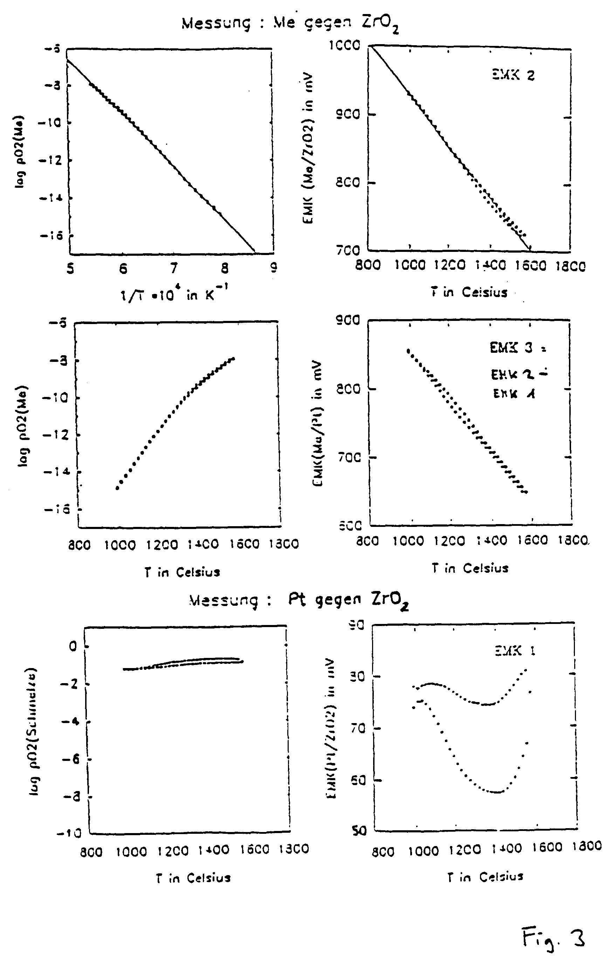

- Figur 3: als Beispiel typische Meßkurven, die mit einer Metallelektrode (Me) in einer Glasschmelze erhalten wurden,

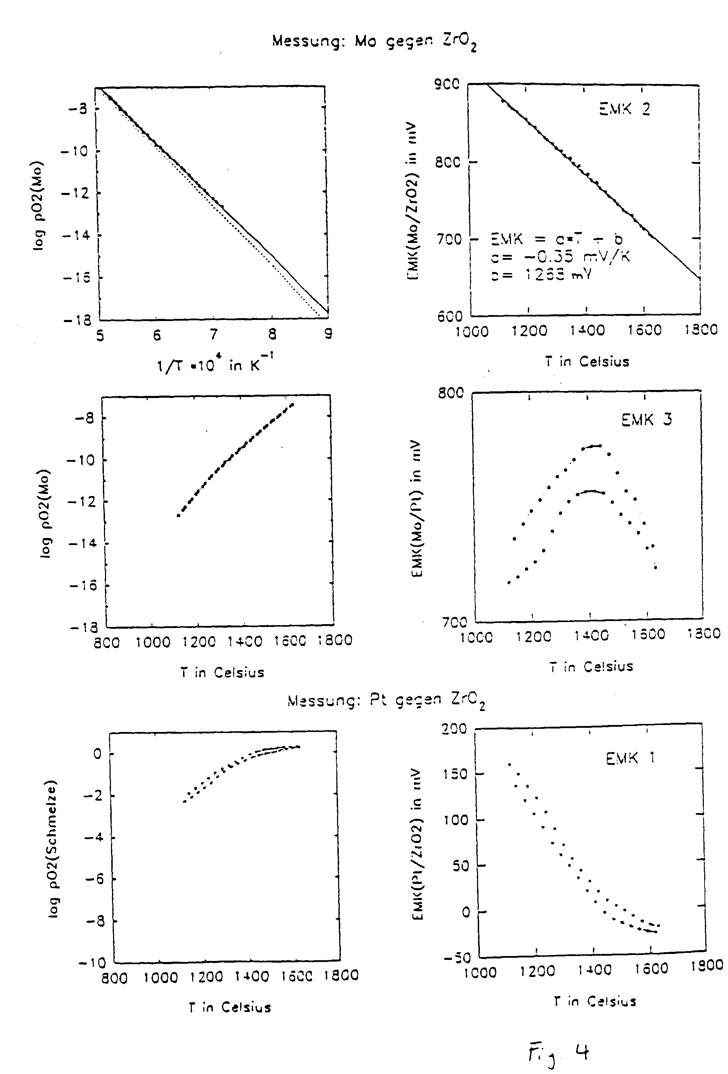

- Figur 4: die Meßkurven, die mit einer Mo/MoO₂-Elektrode in einer Na-Ca-Silicat-Glasschmelze erhalten wurden,
- Figur 5: die Meßkurven, die mit einer Mo/MoO₂-Elektrode in einer Schmelze aus Borosilicatglas 3.3 erhalten wurden (Messung Mo gegen ZrO₂)

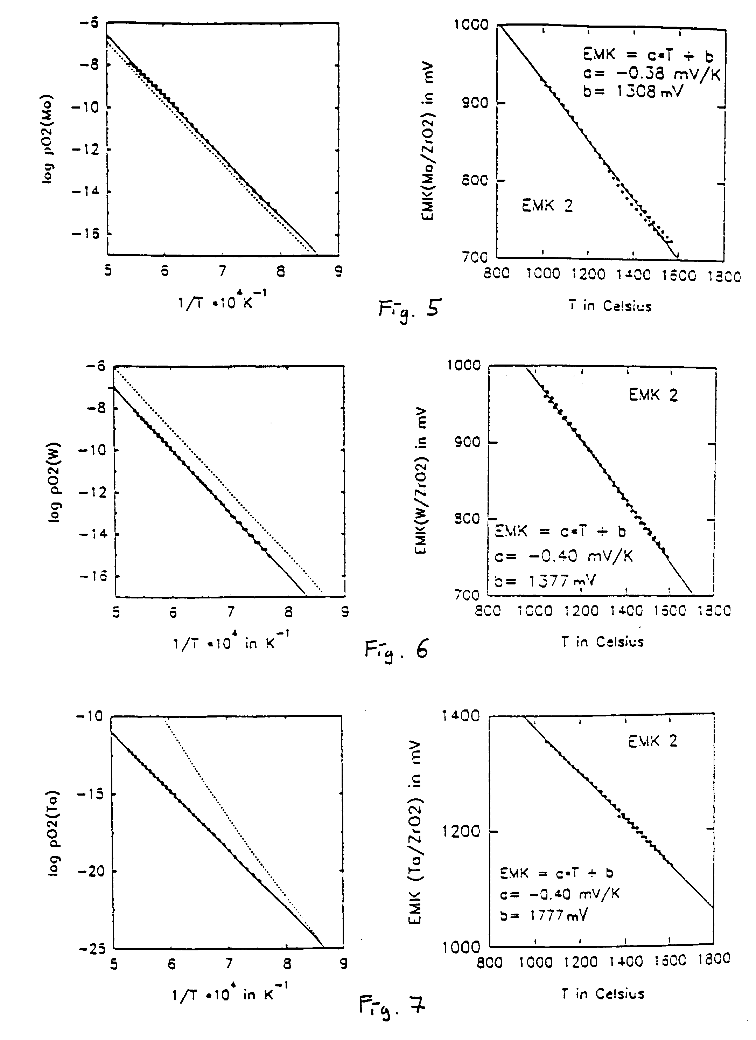

- Figur 6: die Meßkurven, die mit einer W/WO₂-Elektrode in der gleichen Borosilicatglasschmelze wie in Fig. 5 ermittelt wurden (Messung W gegen ZrO₂) und
- Figur 7: die Meßergebnisse, die mit einer Ta/Ta₂O₅-Elektrode in der gleichen Borosilicatglasschmelze wie in den Figuren 5 und 6 erhalten wurden (Messung Ta gegen ZrO₂).

### Meßaufbau

Die Funktion der alternativen Referenzelektroden wurde in einer Reihe technischer Glasschmelzen getestet. Hierbei wurden insbesondere durch Messung der EMK der Metall/Metalloxid-Elektrode gegen eine Zirkondioxid-Elektrode als Funktion der Temperatur Eichkurven erstellt. Diese Eichkurven bzw. die daraus ermittelten thermodynamischen Daten für das betreffende Metall/Metalloxidpaar wurden zur Bestätigung der Brauchbarkeit der alternativen Referenzelektroden theoretischen Daten bzw. berechneten Kurven gegenübergestellt.

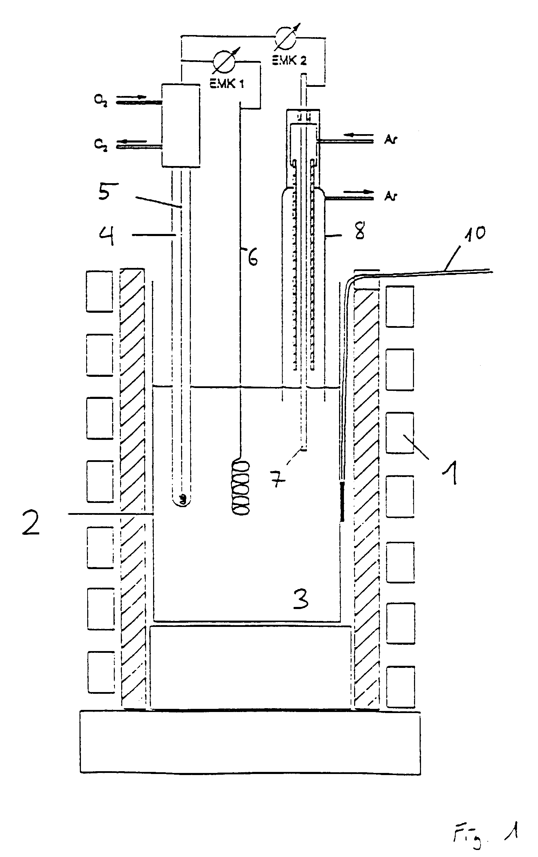

Der Versuchsaufbau ist in Figur 1 skizziert. In die mittels einer Induktionsspule (1) in einem Platintiegel (2) beheizbare Glasschmelze (3) wurden drei Elektroden (4, 6, 7) von oben eingeführt: eine herkömmliche ZrO₂-Elektrode (4) mit Pt-lnnenableitung (5) und Sauerstoffinnenspülung (1 bar), eine Reinplatin-Elektrode (6) sowie eine Metall-Elektrode (7) (in den Ausführungsbeispielen: Mo, Ta oder W-Stäbe Durchmesser jeweils 4 mm, Länge 400 mm), deren nicht in die Schmelze tauchender Teil vorteilhafterweise durch eine mit einem Inertgas, z. B. Ar, beschickte Hülse (8), insbesondere aus Pt, geschützt wurde.

Die verwendeten Metalle hatten die folgende Reinheit:

| | | |
|---|---|---|
| Mo | 99.95 % | 0.03 % W (Metallwerk Plansee, Reutte (I) ) |
| Ta | 99.90 % | 0.04 % Nb ( " ) |
| W | 99.96 % | 0.01 % Mo ( " ) |

Zwischen den Elektroden (4, 6, 7) wurden Spannungen gemessen. Die Temperatur der Schmelze wurde mit Hilfe des Thermoelements (10) bestimmt. Aus der EMK 1 erhält man in gewohnter Weise (s. Gl. 1) den in der Glasschmelze herrschenden Sauerstoffpartialdruck. Mit der EMK 2 berechnet man den Sauerstoffpartialdruck an der Metall-Elektrode (n. Gl. 1).

Der Versuchsablauf bestand darin, die mit den Elektroden (4, 6, 7) versehene Glasschmelze (3) definierten Temperaturprogrammen zu unterwerfen, in der Regel Temperaturzyklen. Dabei wurden die Temperaturen mit zwischen 40 K/h und 400 K/h über einen Temperaturbereich von einigen hundert Grad variiert. Bei einigen Zyklen wurden die Schmelzen zusätzlich mechanisch gerührt (Rührer ist hier nicht eingezeichnet).

### Zur Auswertung der Messungen:

Der in Figur 1 skizzierte Meßaufbau lieferte die Meßgrößen EMK (Pt/ZrO₂) = EMK 1 und EMK (Me/ZrO₂) = EMK 2 für die Metalle Me = Mo, W oder Ta als Funktion der Temperatur.

In Figur 3 sind die typischen Meßergebnisse und deren Auswertung für eine Schmelze abgebildet. Die ebenfalls dargestellte EMK (Me/Pt) = EMK 3 errechnet man als Differenz EMK 3 = EMK 2 - EMK 1. Der umgekehrte Weg wäre in der Praxis beim Wanneneinsatz der Meßkette Me/Me-Oxid/Schmelze, pO₂/Pt einzuschlagen. Als Grundlage für die Umrechnung EMK 3 - EMK 1 - pO₂ (Schmelze) dienen dann die individuellen, für die jeweilige Schmelze charakteristischen "Eichkurven" EMK 2 = f(T) des Metalls Me. Es liegt auf der Hand, daß sowohl EMK 2 = f(T) als auch pO₂ (Me/MeₓO_{y}) f(T) als Eichkurven verwendet werden können. Hierzu bedarf es lediglich unterschiedlicher mathematischer Fomulierungen des Problems.

Genauso, wie man aus der EMK 1 einen momentanen und lokalen Sauerstoffpartialdruck der Schmelze errechnen kann (s. Gl. 1 und den Plot unten links in Fig. 3 als Beispiel für die Auswertung einer pO₂-Bestimmung in der Glasschmelze mit der herkömmlichen "ZrO₂-Sonde"), so erhält man formal mit Gl. 1 einen Zahlenwert für den Sauerstoffpartialdruck an der Phasengrenze Me/Me-Oxid.

Zwei funktionale Darstellungen sind in Figur 3 einander gegenübergestellt: log pO₂ = f(T) im Plot mitte links und log pO₂ = f(1/T) im Plot links oben. Aus ihnen kann man die termodynamischen Daten der Oxidationsreaktion an der Phasengrenze Me/MeₓO_{y} ablesen. Mit Gl. 4 berechnet man die Reaktionsenthalpie zu

ΛH° = (δlog pO₂(Me/MeₓO_{y}) / δ(1/T)) · (2.303 · R · y/2) (5)

Die Auswertung der Raktionsentropie erfolgt dagegen am bequemsten nach der Formel:

ΛS° = (δEMK(Me/ZrO₂) / δT) · (4 · F) (6)

Die Kurven sollten ebenso wie die thermodynamischen Größen charakteristisch für das Metall, ansonsten aber unabhängig von der Wahl der Glasschmelze sein. Die tatsächlichen Abweichungen erkennt man beim Vergleich der Meßkurve mit einer theoretischen Kurve, die allein auf den thermodynamischen Daten der entsprechenden Oxidationsreaktion zwischen den reinen Komponenten beruht. Die theoretischen Kurven sind bei den folgenden Abbildungen gestrichelt in das jeweils erste Diagramm mit eingezeichnet.

Solange die Abweichungen von den theoretischen Kurven für jede Glasart reproduzierbar bleiben, steht, wie bereits oben erwähnt, der Aufstellung einer empirischen Eichkurve nichts im Wege.

### Bezugselektrode aus Mo/MoO₂ in Schmelzen technischer Gläser:

Die Figuren 4 und 5 fassen die Ergebnisse, die beim Test des Molybdäns in den Schmelzen verschiedener technischer Gläser gewonnen wurden, zusammen. Die Darstellungen sind jeweils repräsentativ für eine Reihe von Experimenten, bei denen Temperaturzyklen mit unterschiedlichen Aufheiz- bzw. Abkühlgeschwindigkeiten, zum Teil unter gleichzeitigem Einsatz eines Rührers durchgeführt wurden. Es wurden jeweils reine Metallstäbe verwendet, deren Oxidschicht sich erst beim Eintauchen in die Glasschmelze bildete.

Bei allen Experimenten findet man eine gute bis sehr gute Übereinstimmung der experimentellen und theoretischen Werte. Dabei ist auch zu beachten, daß die der Auswertung zugrundeliegenden Temperaturen auf höchstens 10°C genau bestimmt waren. Die individuell verschiedenen Abweichungen können außerdem durch die Ausbildung unterschiedlich "dotierter" MoO₂-Schichten und unterschiedlicher Diffusionspotentiale in den Schichten und Schmelzen begründet sein.

Alle Mo-Stäbe wiesen unabhängig von der Glasart bei Versuchsende eine silbrig, teils gelblich schimmernde, feste Anlaufschicht auf. Die Dicke der Anlaufschichten lag nach jeweils mindestens einwöchigem Einsatz im µm-Bereich.

Für alle Glasschmelzen lassen sich gut reproduzierbare Eichkurven angeben. Als Eichkurve wurde hier ohne Beschränkung der Allgemeinheit die Abhängigkeit EMK 2 = f(T) gewählt. Die erstmaligen Einstellzeiten der Sonden lagen bei einigen Stunden Glaskontakt. Höhere Temperaturen beschleunigten die Ausbildung einer stabilen EMK. Danach waren die Sonden gebrauchsfertig. Im einzelnen gilt:

**Natronkalkglas (Zusammensetzung: SiO**_{**2**} **74 Gew.-%, CaO 10 Gew.-%, Na**_{**2**}**O 16 Gew.-%, Sb**_{**2**}**O**_{**3**} **0,2 Gew.-%):** Auch nach mehrwöchigem Einsatz der Sonde traten keine Probleme auf. Das Glas enthielt Sb, was aber keine negativen Auswirkungen hatte.

**Borosilicatglas 3.3 (ISO 3585 v. 07.91):**
In der NaCl-geläuterten Borosilikatglasschmelze zeigte der Molybdänstab die geringsten Korrosionsspuren. Der pO₂ der Schmelze variierte wie zu erwarten nur sehr wenig mit der Temperatur.

Die experimentellen thermodynamischen Daten sowie die Koeffizienten a und b der "Eichkurven" aus den Messungen sind in der nachfolgenden Tabelle den theoretischen Werten der Festkörperreaktionen Mo + O₂ = MoO₂ (aus The Oxide Handbook, s.o.) gegenübergestellt. Der Vergleich der Daten stützt die Vermutung, daß sich in den hier untersuchten Glasschmelzen eine MoO₂-Anlaufschicht bildet. Das Ergebnis deckt sich auch mit früheren in der Literatur belegten Beobachtungen.

Gegenüberstellung der experimentellen und theoretischen Daten für Mo/MoO₂

| | Λ H°exp kJ/mol | Λ H°theo kJ/mol | Λ S°exp J/K | Λ S°theo J/K | -a mV/K | b mV |
|---|---|---|---|---|---|---|
| NaKaGlas | -525 | -553 | -140 | -140 | 0.35 | 1268 |
| Borosilicatglas 3.3 | -545 | -553 | -152 | -140 | 0.38 | 1308 |

**Bezugselektroden aus W/WO**_{**2**} **und Ta/Ta**_{**2**}**O**_{**5**} **in einer Borosilicatglasschmelze (Borosilicatglas 3.3):** Als Alternativen zum Molybdän wurden auch die Metalle Wolfram und Tantal auf ihre Eignung als Referenzelektrode getestet. Erste orientierende Untersuchungen wurden auf die Reaktion in der oben genannten Borosilicatglasschmelze beschränkt. Das Ergebnis der Messungen fällt, wie die Figuren 6 und 7 zeigen (es sind bei diesen Ausführungsbeispielen der Übersichtlichkeit halber lediglich die Eichkurven EMK2 = f(T) dargestellt; die in den Figuren 3 und 4 dargestellten zusätzlichen Kurven lassen sich hieraus mit Hilfe der EMK1-Messung, wie oben beschrieben, leicht berechnen) auch für diese Metalle prinzipiell positiv aus. Dafür sprechen die analog zur Mo-Bezugselektrode bestimmten theoretischen Kurven, die in den Figuren zum Vergleich gestrichelt eingezeichnet wurden, sowie die Gegenüberstellung der aus den Messungen nach den Gleichungen 5 und 6 gewonnenen experimentellen thermodynamischen Daten mit den entsprechenden theoretischen Werten:

Gegenüberstellung der experimentellen und theoretischen Daten (aus The Oxide Handbook) für W/WO₂ und Ta/Ta₂O₅:

| Elektrode | Λ H°exp kJ/mol | Λ H°theo kJ/mol | Λ S°exp J/K | Λ S°theo J/K | -a mV/K | b mV |
|---|---|---|---|---|---|---|
| W/Wo₂ | - 570 | - 572 | -160 | -170 | 0.40 | 1377 |
| Ta/Ta₂O₅ | -1795 | -2027 | -400 | -420 | 0.40 | 1777 |

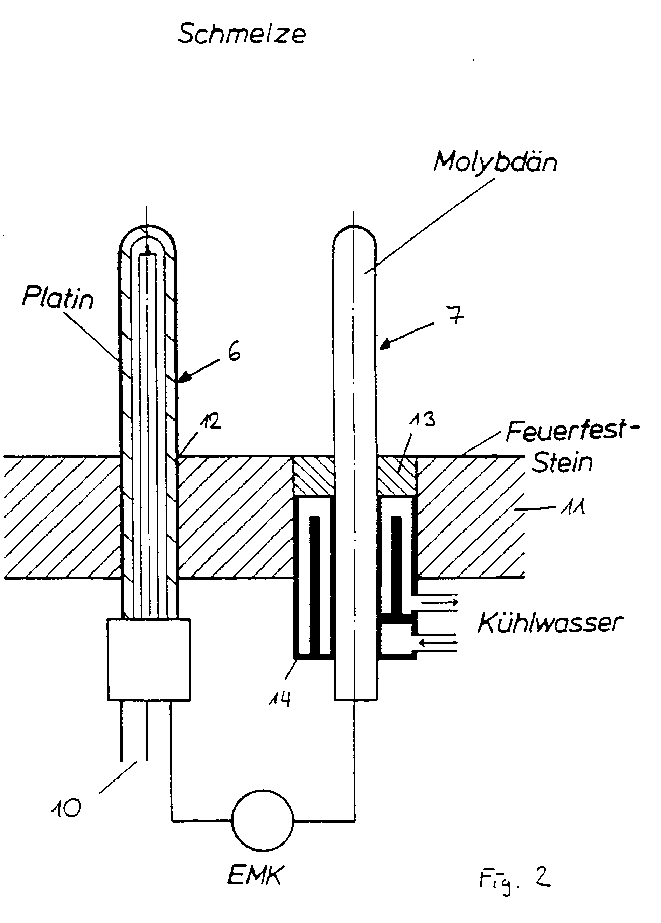

In Figur 2 ist eine Me/MeₓO_{y}-Elektrode als Bodenelektrode in einer Glasschmelzwanne ausgebildet. Die in der Figur dargestellte Anordnung besteht aus einem Me/MeₓO_{y}-Stab (7) und einer als einseitig geschlossenes Rohr ausgebildeten Pt-Gegenelektrode (6), die beide von unten durch den Wannenboden (11) hindurch in die Glasschmelzwanne hineinragen. Beide Elektroden (6, 7) sind in Öffnungen (12, 13) in dem aus Feuerfestmaterial bestehenden Wannenboden (11) fixiert und abgedichtet. Die Halterung (14) für die Me/MeₓO_{y}-Elektrode (7) ist mit einer Kühlflüssigkeit kühlbar. Damit können die Referenzelektroden im laufenden Wannenbetrieb ausgetauscht werden. Im Inneren der Platin-Elektrode (6) ist ein Thermoelement (10) angeordnet. Die elektrischen Anschlüsse der Elektroden (6, 7) und des Thermoelements befinden sich außerhalb der Glasschmelzwanne unterhalb des Wannenbodens (11).

## Patentansprüche

1. Verwendung einer Metall/Metalloxid-Elektrode mit einem metallischen Elektrodenkörper welcher mit wenigstens einer Schicht aus einem schwerlöslichen Oxid dieses Metalls überzogen ist, als Referenzelektrode zur elektrochemischen Bestimmung des Sauerstoffpartialdrucks in lonenschmelzen, insbesondere in oxidischen Glasschmelzen, durch Messung der elektromotorischen Kraft der elektrochemischen Kette Pt / Me/Me-Oxid / Schmelze / Pt.

2. Verwendung nach Anspruch 1,
**dadurch gekennzeichnet,**
daß sich die Oxidschicht auf dem Elektroden körper erst beim Eintauchen der Elektrode in die Schmelze bildet.

3. Verwendung nach Anspruch 1 oder 2,
**dadurch gekennzeichnet,**
daß die Elektrode (7) aus Mo/MoO₂, W/WO₂, Hf/HfO₂, Nb/NbO, oder Ta/Ta₂O₅ besteht oder aus Legierungen der genannten Metalle untereinander und ihren Mischoxiden.

4. Verwendung nach wenigstens einem der Ansprüche 1 bis 3,
**dadurch gekennzeichnet,**
daß die Elektrode (7) als Stab oder als einseitig geschlossenes Rohr ausgebildet ist.

5. Verwendung nach wenigstens einem der Ansprüche 1 bis 4,
**dadurch gekennzeichnet,**
daß im Inneren der Elektrode (7) ein Thermoelement angeordnet ist.

6. Verwendung nach wenigstens einem der Ansprüche 1 bis 5,
**dadurch gekennzeichnet,**
daß der nicht in die Schmelze eintauchende Teil der Elektrode (7) von einer mit einem Inertgas beschickbaren Hülse (8) umgeben ist.

## Claims

1. The use of a metal/metal oxide electrode having a metallic electrode body which is coated with at least one layer of a sparingly soluble oxide of said metal, as a reference electrode for the electrochemical determination of the oxygen partial pressure in ion melts, in particular in oxidic glass melts, by measuring the electromotoric force of the galvanic cell Pt/Me/Me oxide/melt/Pt.

2. The use according to Claim 1,
characterized in that
the oxide layer on the electrode body is not formed until the the electrode is immersed in the melt.

3. The use according to Claim 1 or 2,
characterized in that
the electrode (7) is made of Mo/MoO₂, W/WO₂, Hf/HfO₂, Nb/NbO, or Ta/Ta₂O₅ or of alloys of the said metals with one another and their mixed oxides.

4. The use according to at least one of Claims 1 to 3,
characterized in that
the electrode (7) is in the form of a rod or of a tube sealed at one end.

5. The use according to at least one of Claims 1 to 4,
characterized in that
a thermocouple is disposed in the interior of the electrode (7).

6. The use according to at least one of Claims 1 to 5,
characterized in that
that portion of the electrode (7) which is not immersed in the melt is surrounded by a sleeve (8) into which an inert gas can be fed.

## Revendications

1. Utilisation d'une électrode métal/oxyde métallique ayant un corps d'électrode métallique qui est revêtu d'au moins une couche d'un oxyde difficilement soluble de ce métal, en tant qu'électrode de référence en vue de la détermination électrochimique de la pression partielle de l'oxygène dans des masses fondues d'ions, en particulier des masses fondues de verre, par mesure de la force électromotrice de la chaîne électrochimique Pt/métal/oxyde métallique/masse fondue/Pt.

2. Utilisation selon la revendication 1, caractérisée en ce que la couche d'oxyde ne se forme sur le corps d'électrode que lors de l'immersion de l'électrode dans la masse fondue.

3. Utilisation selon la revendication 1 ou 2, caractérisée en ce que l'électrode (7) se compose de Mo/MoO₂, de W/WO₂, de Hf/HfO₂, de Nb/NbO ou de Ta/Ta₂O₅ ou d'alliages des métaux cités entre eux et de leurs oxydes mixtes.

4. Utilisation selon au moins l'une quelconque des revendications 1 à 3, caractérisée en ce que l'électrode (7) est formée en tant que tige ou en tant que tube fermé d'un côté.

5. Utilisation selon au moins l'une quelconque des revendications 1 à 4, caractérisée en ce qu'un thermo-élément est disposé dans l'intérieur de l'électrode (7).

6. Utilisation selon au moins l'une quelconque des revendications 1 à 5, caractérisée en ce que la partie de l'électrode (7) non immergée dans la masse fondue est entourée d'un manchon (8) que l'on peut remplir d'un gaz inerte.
